(19) **Europäisches Patentamt / European Patent Office / Office européen des brevets**

(11) **EP 1 608 146 B1**

(12) **EUROPEAN PATENT SPECIFICATION**

(45) Date of publication and mention
of the grant of the patent:
**19.09.2007 Bulletin 2007/38**

(51) Int Cl.:
**H04N 1/405** (2006.01)

(21) Application number: **05105199.3**

(22) Date of filing: **14.06.2005**

(54) **Method for generating a dither mask**

Verfahren für das Erzeugen einer Zittermatrix

Procédé pour la génération d'une matrice de tremblement

(84) Designated Contracting States:
**AT BE BG CH CY CZ DE DK EE ES FI FR GB GR HU IE IS IT LI LT LU MC NL PL PT RO SE SI SK TR**

(30) Priority: **14.06.2004 EP 04076720**

(43) Date of publication of application:
**21.12.2005 Bulletin 2005/51**

(73) Proprietor: **Océ-Technologies B.V.**
**5914 CC Venlo (NL)**

(72) Inventor: **Kuiper, Paul**
**5615 NH, Eindhoven (NL)**

(74) Representative: **Vanoppen, Ronny R.J. et al**
**Océ-Technologies B.V.**
**Corporate Patents**
**Postbus 101**
**5900 MA Venlo (NL)**

(56) References cited:
**EP-A- 0 606 992        EP-A- 1 241 865**
**US-A1- 2002 163 528    US-A1- 2003 035 146**
**US-A1- 2004 085 588**

EP 1 608 146 B1

**Description**

FIELD OF THE INVENTION

The present invention is related to the halftoning of continuous tone or grey scale images for reproduction on a printing or copying system. Particularly of interest are methods for generating a dither mask for use for the halftoning of grey scale images.

BACKGROUND OF THE INVENTION

Halftoning is a conversion technique enabling to render continuous tone images or grey scale images on printing devices having a lower tonal resolution. In case of a bi-tonal device, continuous tone information is simulated by controlling the coverage or in other words the amount of pixels in a multi pixel area which are actually rendered as image dots. There is a trade off between spatial resolution and tonal resolution. As a result of the halftoning method image dots are formed in certain ordered patterns. This may lead to visible artefacts or textures in the printed image. To reduce the appearance of these artefacts the halftoning technique is to be designed to produce patterns that are optimally pleasing for the human eye when printing on a non-ideal printer. Halftoning techniques can be classified into two main categories: Amplitude Modulated (AM) halftoning and Frequency Modulated (FM) halftoning. In AM halftoning halftone cells are laid out on a grid with a fixed spatial frequency and angle. The tone is modulated by varying the size of the halftone element (amplitude). In FM halftoning the halftone element size is constant and may be chosen equal to the size of one pixel but the average distance between the elements (frequency) is varied to produce a certain tone. In contrast to AM halftoning there are no fixed frequencies or angles. FM halftoning can be further divided into two subcategories: dithering and error diffusion. FM dithering is characterised by a pixel by pixel comparison of the grey scale images against a dither mask comprising threshold values. The threshold values in the dither mask represent the order in which pixels are turned on for each grey scale level. The dither mask has a predetermined size and is tessellated over the entire image thereby defining a screen such that the grey scale level of each pixel can be compared with a corresponding threshold value of the dither mask enabling to decide whether an image dot is to be printed or not. When halftoning using an error diffusion technique the grey scale level of each pixel is compared with a corresponding threshold value of the dither mask, however when deciding whether an image dot is to printed or not, the information resulting from comparing neighbouring pixels with their corresponding threshold values is taken into account. Error diffusion techniques are however known to create worm artefacts at low grey scale levels and to require high processing resources.

From all techniques described above FM dithering seems to be at present the most interesting halftoning technique. FM dithering may however be further divided into stochastic and non-stochastic dithering. In stochastic dithering the threshold values are positioned randomly within the dither mask whereas in non-stochastic dithering the threshold values are positioned in the dither mask in a predetermined order. A potential disadvantage of using non-stochastic dithering masks is that highly structured image dot patterns may be produced which are highly susceptible to positioning errors and hence may introduce banding effects. In stochastic dithering the random or pseudo random positioning of the threshold values in the dither mask is typically based on the global minimisation of some spatial or frequency energy function. Examples of stochastic dither masks include the "blue noise masks" as described in US5,111,310 (Parker et al.), the dither masks generated by the "void and cluster method" as described in US5,535,020 (Ulichney). A problem associated with the aforementioned examples is that this global stochastic approach for generating dither matrices is complex and time consuming and requires very large processing resources. This problem can be at least partially met by employing the so-called local stochastic dithering technique suggested in "Efficient design of large threshold arrays for accurate tone reproduction", IS&T's 48th Annual Conference Proceedings, Pages 530-535 by P. Lermant instead of the global stochastic approaches described in US5,111,310 and US5,535,020.

When, in order to enable reproduction on a printer, images are halftoned using a screen being based on a global or local stochastic dither mask, in general no direction dependency is taken into account or in other words the stochastic dither mask is generated isotropic. In practice however, the printer may have at least in a printing mode a different print resolution in the print medium propagation direction and a direction perpendicular thereto. For instance, in case the printer is a so-called scanning printer, the printer may have a different printing resolution in the scanning direction and the sub scanning direction, i.e. usually the print medium propagation direction. The fact that stochastic dither masks are not designed to cope with a difference in resolution in both print directions leads to undesired and perceptually disturbing snake-like textures in the printed image in the direction having the higher printer resolution.

SUMMARY OF THE INVENTION

It is an object of the invention to provide a method for generating dither masks using a stochastic technique. The generation of the dither masks should be such that undesired textures in printed images which are halftoned using these dither masks are avoided or at least limited, in particular when such images are to be printed with a different resolution along the print medium, i.e. the print medium propagation direction, and across the print medium, i.e. a direction perpendicular to the print medium propagation direction.

It is a further object of the invention to provide a method for generating dither masks using a stochastic technique requiring limited processing time and processing resources.

To meet these objects a method is disclosed for generating a dither mask using a local stochastic technique for use for the halftoning of grey scale images by a pixel by pixel comparison of the images against the dither mask, the method comprising the step of generating the dither mask defined in claim 1.

In an embodiment of the invention, the dither mask is built-up from a number of equally sized sub-matrices, each sub-matrix having a predetermined ranking order within the dither mask, such that the selection of each additional pixel is effected by selecting one of the available positions of a selected sub-matrix. The selection of the sub-matrix is executed taking account of the ranking order of the sub-matrices and the corresponding dot profile.

The selection of an additional pixel within a selected sub-matrix is performed using a local stochastic technique. Hence the selection of an additional pixel among the available positions in the selected sub-matrix is based on the local minimisation of some spatial or frequency energy function. For instance, for each available position within the selected sub-matrix the energy is calculated using a spatial energy function. To take proper account of potential differences between the dot pitch in a predetermined direction and a direction perpendicular thereto when rendering images, this aspect ratio may be used as one of the parameters of the spatial energy function. Subsequently, the pixel corresponding to the available position having the lowest energy value is selected. In a further embodiment according to the present invention, when calculating energy values for selecting between available positions within a sub-matrix, the interaction of previously selected pixels of the selected sub-matrix as well as of the sub-matrices adjacent to the selected sub-matrix is taken into account.

BRIEF DESCRIPTION OF THE DRAWINGS

Fig.1 depicts an 8x8 master matrix wherein each element has a zero initialisation value according to an exemplary embodiment of the present invention.

Fig. 2 depicts the 8x8 master matrix of Fig.1, which is subdivided in 16 2x2 sub-matrices, each of the sub-matrices having a ranking order assigned thereto.

Fig.3, 4 and 5 each depict an intermediate stage of the master matrix of Fig.1 wherein the zero initialisation values are gradually replaced by incremental integer values according to an embodiment of the present invention.

Fig.6 depicts two dot profiles produced for a predetermined grey scale level using a dither mask generated according to the method of the present invention. The dot profiles are produced using a printer printing in a printing mode having a print resolution of 300 dpi in the medium propagation direction, and a print resolution of 600 dpi in the direction perpendicular thereto. According to an embodiment of the present invention,

Fig.6a) depicts a dot profile produced using a dither mask generated using a local stochastic technique where the dot pitch aspect ratio is set equal to 1, while Fig.6b) depicts a dot profile produced using a dither mask generated using a local stochastic technique where the dot pitch aspect ratio is set equal to 2.

DETAILED DESCRIPTION OF THE INVENTION

In relation to the appended drawings, the present invention is described in detail in the sequel. Several embodiments are disclosed. It is apparent however that a person skilled in the art can imagine several other equivalent embodiments or other ways of executing the present invention, the scope of the present invention being limited only by the terms of the appended claims.

For image reproduction images are offered digitally to a printer. There are numerous ways to generate a digital image. For instance, a digital image may be generated by scanning an original using a scanner. Images may also be generated by a camera or a video camera. Besides digital images generated by a scanner or a camera, which are usually in a bitmap format or a compressed bitmap format also artificially created, e.g. by a computer program, digital images or documents may be offered to the printer. The latter images are in a structured format including but not limited to a page description language (PDL) format and an extensible markup language (XML) format. Examples of a PDL format are PDF (Adobe), PostScript (Adobe), and PCL (Hewlett-Packard). Regardless of the origin of the digital image one may opt to store the digital image in a memory such that it can be easily retrieved by the printer. The image data associated with each image may be processed by the printer such as to generate digital colour separation images in the process colours of the printer. The process colours are a limited number of colours of marking particles available on the printer. The process colours determine the maximum achievable colour gamut of the printer. Examples of process colours are black, white, cyan, magenta, yellow, red, green, blue, pink, brown and orange. Most printers such as ink-jet printers, electro(photo)graphic printers and magnetographic printers form image dots of marking particles in the process colours. Composite colours can be obtained perceptually as the human eye integrates the dot patterns formed by the printer in the respective process colours and/or physically by mixing and/or superposition of image dots of marking particles of the respective process colours. However these printers are only capable of printing a limited number of grey scale levels per pixel for each process colour which imposes a problem for the printing of grey scale or continuous tone images. The image data associated with each separation image specify at least a grey scale level or tonal level for the corresponding process colour for each pixel of the grey scale image. The grey scale level is typically defined by using an 8-bit value which enables to distinguish between 256 grey levels per process colour. Although there are printers capable of printing up to 16 grey scale levels per pixel per process colour, most printers are only capable of printing 2 grey scale levels per pixel per process colour. Hence in order to enable the faithful reproduction of these so-called grey scale or continuous tone images, the images are halftoned. In case of a multi-colour image, each colour separation image may be halftoned using a different screen.

Although the method of the present invention is in no way limited thereto, in the sequel, when reference is made to halftoning this is considered to be binary halftoning while when reference is made to a printer this is considered to be a printer capable only of printing 2 grey scale levels per pixel per process colour. By consequence halftoning a separation image is the conversion for each pixel of the multi-bit (typical 8-bit) value identifying the grey scale level of the corresponding process colour into a single bit value, i.e. "0" or "1". This single bit value indicates whether or not an image dot of the corresponding process colour is to be printed.

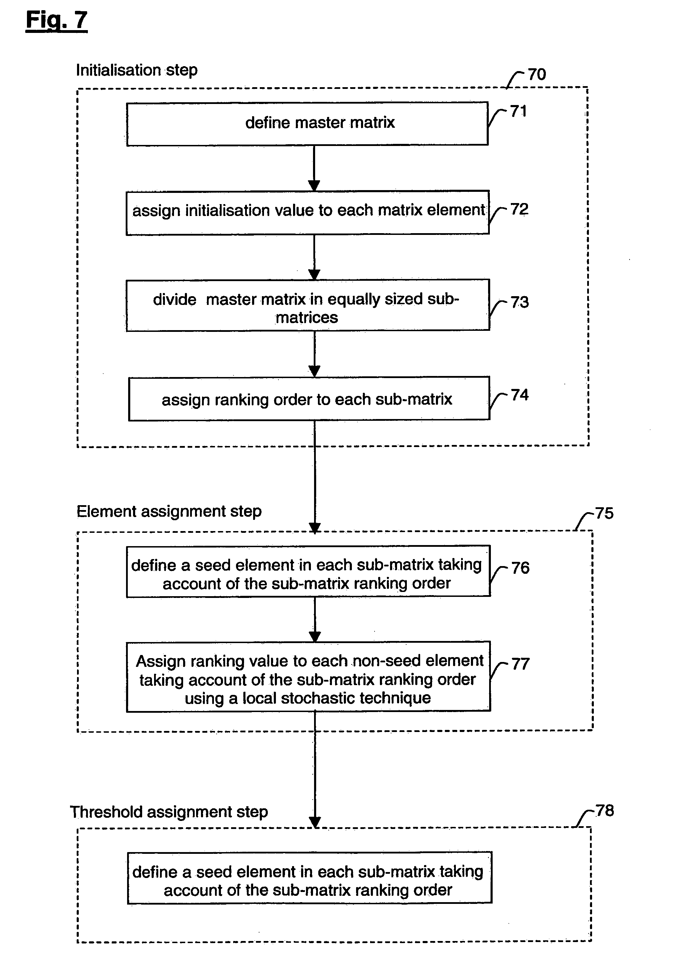

In an embodiment of the invention with reference to fig.7, a dither mask for use for the halftoning of grey scale images is generated using a local stochastic technique. The generation is basically a three-step process and proceeds as follows. In the first step, i.e. the initialisation phase (70), first a matrix is defined having a number of elements which is an integer plurality of the maximum of number of grey scale levels of the separation image. The integer value is at least two. This matrix is called the master matrix (71). An initialisation value, e.g. zero, is assigned to each element of the master matrix (72). This master matrix is divided into a plurality of equally sized sub-matrices (73). Preferably the sub-matrices have at least a number of elements equal to the maximum number of grey scale levels of the separation image. An integer value is assigned to each sub-matrix, the integer value being uniquely selected from 1 to the number of sub-matrices and representing a ranking order for the respective sub-matrices within the master matrix (74). This ranking of the sub-matrices may take place in a structured way e.g. using Bayer's procedure of maximum separation between two consecutive sub-matrices. Explicit reference is made to Digital Color halftoning, H. R. Kang, p. 279-284, IEEE Press, where Bayer's procedure is explained in depth.

After ranking of the sub-matrices, in the second step, i.e. the element assignment step (75), the initialisation value of each element of the master matrix is to be replaced by a unique integer value which will be incrementally assigned to each element of the master matrix hence establishing a ranking order between the elements. In the third step, i.e. the threshold assignment step (78), this element ranking order will be used to assign a threshold value to each matrix element. When assigning integer values to each of the matrix elements, the ranking order of the sub-matrices is taken into account. Hence one of the matrix elements of sub-matrix 1 is assigned the integer value 1, subsequently one of the matrix elements of sub-matrix 2 is assigned the integer value 2. This is continued incrementally till each sub-matrix has an element having a value different from its initialisation value (76). These elements are so-called seed elements as they are the first element within each sub-matrix having a value different from the initialisation value. The selection of a seed element within a particular sub-matrix may take place according to a predetermined pattern or randomly. During this selection (76) each sub-matrix is considered independently from its neighbouring sub-matrices.

In case multiple dither masks are to be generated for rendering a multi-colour image, the selection of seed elements within sub-matrices of a master matrix associated with a particular process colour is preferably correlated with the selection of seed elements for the other process colours. For instance in case of a CMYK printer, the selection of seed elements for generating the dither mask associated with e.g. the black process colour may take place according to a predetermined pattern. For the selection of additional seed elements for generating the dither masks associated with the other process colours, the already selected seed elements including those associated with the black process colour are taken into account, e.g. the selection of additional seed elements may be based on the local minimisation of some spatial or frequency energy function.

Next in the stochastic phase (77) an incremental integer value is also assigned to each of the remaining elements of the master matrix. The remaining elements are the elements still having their initialisation value. The incremental integer assignment is effected taking the ranking order of the sub-matrices into account. This means that a second element in sub-matrix 1 is assigned a value equal to the number of sub-matrices + 1, subsequently a second element in sub-matrix 2 is assigned a value equal to the number of sub-matrices + 2. This is continued till the initialisation value of each of the remaining elements is replaced by an integer value ranging from the number of sub-matrices + 1 to the number of elements in the master matrix. The assignment of integer values to the remaining elements proceeds according to a stochastic technique. As the assignment has always to take place to an element of a predetermined sub-matrix instead of all possible remaining elements of the master matrix, the technique is called a local stochastic technique. The master matrix is converted to a dither matrix or dither mask by replacing the element values by threshold values (78). The number of threshold values is chosen dependent upon the number of grey scale levels of the separation images. When opting for a linear conversion approach, each grey scale level corresponds to a corresponding threshold value. As there are more matrix elements than threshold values a number of elements may have the same value. The assignment of the threshold values is such that the lowest threshold value, corresponding to the lowest grey scale level of the separation image, is assigned to the matrix elements having the lowest integer values or in other words the lowest ranking. Hence the lowest threshold value is first assigned to the matrix element with integer value 1 and also to matrix elements with integer values 2 to 8 if the ratio between the number of elements of the master matrix and the number of grey scale levels is e.g. 8. By consequence the dot profile corresponding to the lowest grey scale level produced when using this dither mask has eight pixels rendered. The second lowest threshold value is assigned to the matrix elements with integer values 9 to 16. By consequence the dot profile corresponding to the second lowest grey scale level produced when using this dither mask has 16 pixels rendered, being the eight pixels corresponding to the lowest grey scale level and eight additional ones. Hence, the dither mask is formed by producing a sequence of dot profiles, each dot profile of the sequence corresponds to a grey scale level, using a stacking constraint with incremental grey scale level such that for each dot profile of the sequence the same pixels are selected compared to the preceding dot profile and the increment in the or each dot profile is realised by adding additional pixels.

To provide a better insight and for clarification purposes the dither mask generation method using a local stochastic technique according to the present invention will now further be discussed by means of a specific example. It is clear that this specific example is only an exemplary embodiment and may not be used to limit the scope of the present invention.

Example

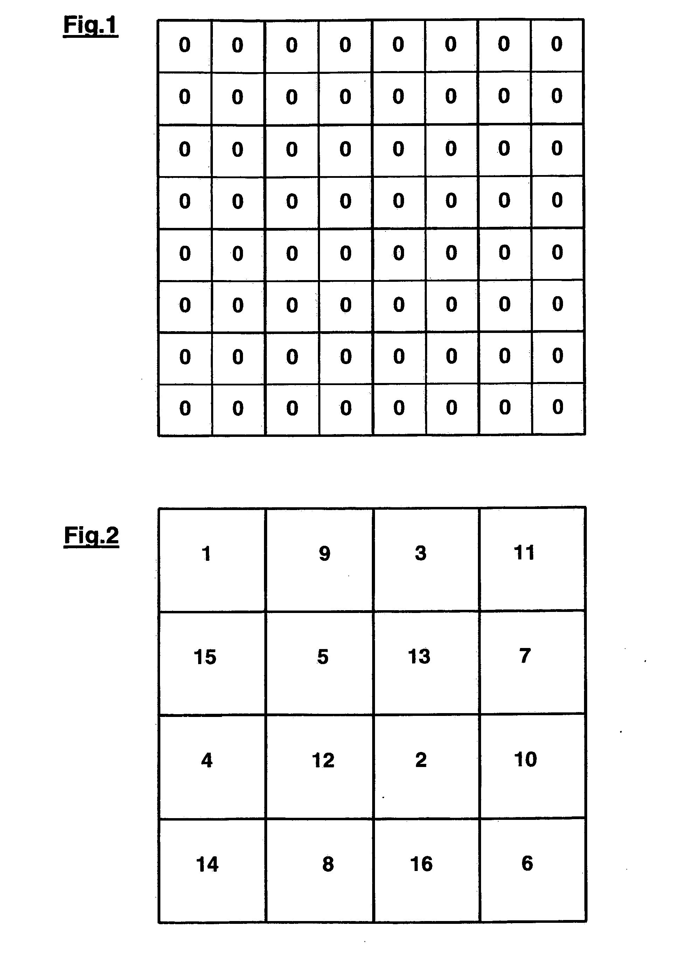

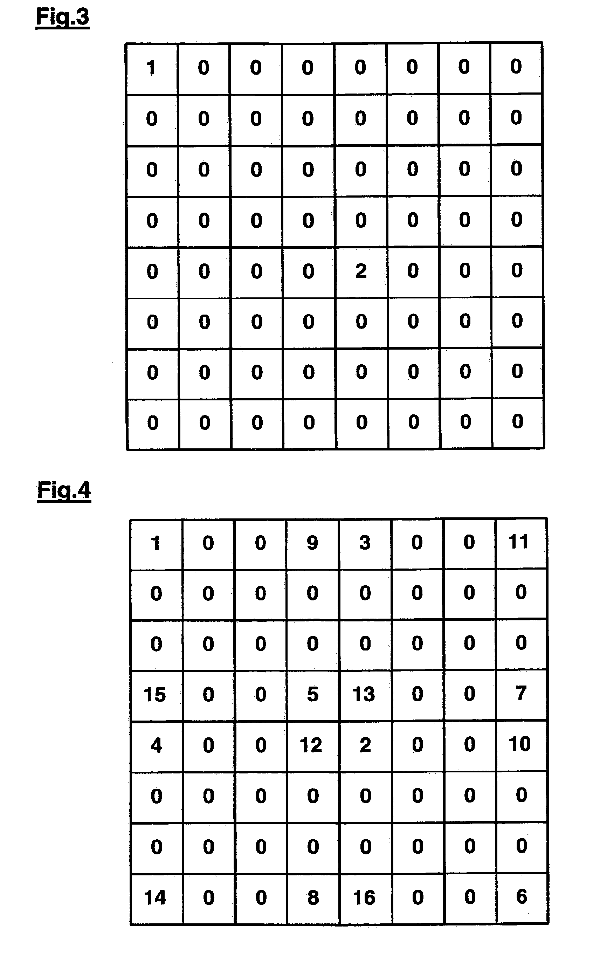

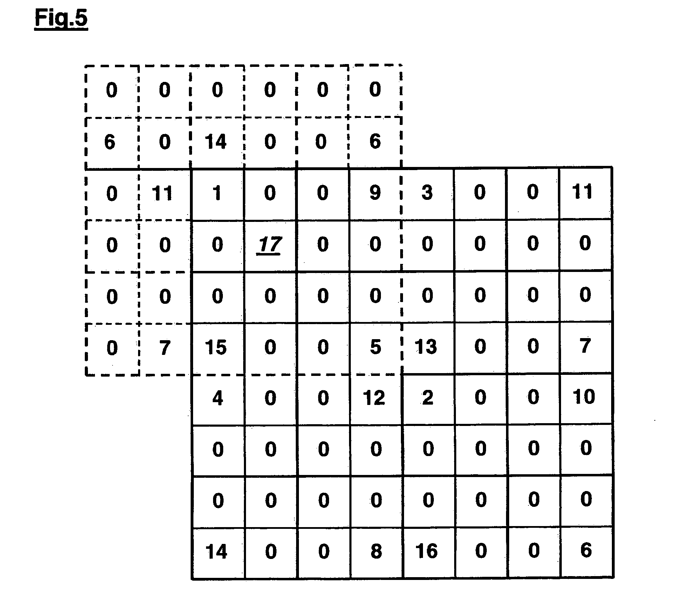

Assume that a dither mask is to be generated for use for the halftoning of a grey scale image having only 4 grey scale levels. In practice this is usually at least 256. The master matrix should have a number of elements being an integer plurality of the number of grey scale levels, the integer value being at least two. Assume that this integer value is chosen 16, thus defining an 8 x 8 master matrix having 64 matrix elements. As demonstrated in fig.1, an initialisation value being zero is assigned to each element of the master matrix. The master matrix is divided in 16 equally sized 2x2 sub-matrices. Hence each sub-matrix includes four elements, being as many elements as the number of grey scale levels of the separation image. As demonstrated in fig.2, the sub-matrices are ranked by assigning an incremental integer value to each of the sub-matrices, starting with integer value one and ending with integer value 16. Subsequently, the initialisation value of each element of the master matrix is to be replaced by a unique integer value which will be incrementally assigned to each element of the master matrix hence establishing a ranking order between the elements. When assigning values to each of the matrix elements, the ranking order of the sub-matrices is taken into account. Initially a value is assigned to one matrix element of each sub-matrix, i.e. the so-called seed elements. Hence, as can be seen in fig.3, one of the matrix elements of the first sub-matrix is assigned the integer value 1, being the upper left element of the first sub-matrix in this example. Subsequently one of the matrix elements of sub-matrix 2 is assigned the integer value 2, being the upper left element of sub-matrix 2 in this example. This is continued incrementally till each of the 16 sub-matrices has a seed element having a value ranging from 1 to 16 as can be seen in Fig. 4. When assigning seed elements each sub-matrix is considered independently from its neighbouring sub-matrices. Next in the stochastic phase an incremental integer value is also assigned to each of the remaining elements of the master matrix, the remaining elements being the elements still having their initialisation value, taking the ranking order of the sub-matrices into account. This means that a second element in sub-matrix 1 is assigned the value 17, being the value equal to the number of sub-matrices + 1. The assignment of an integer value to this element and also to the other remaining elements proceeds according to a local stochastic technique. In particular, for each of the remaining elements of sub-matrix 1 having indices (u,v), an energy value is calculated representative for the energy imposed by neighbouring elements (i,j) having a value different from their initialisation value, being in this example a non-zero value, on the element with indices (u,v). The neighbouring elements are in this example the non-zero elements of the respective sub-matrix and the non-zero elements of the 8 adjacent sub-matrices. As can be seen in fig.5, in case of selection of a new element in sub-matrix 1, the eight adjacent sub-matrices are the sub-matrices with ranking order 6, 14, 8, 9, 5, 15, 7, 11. The energy value for each of the remaining elements of sub-matrix 1 is calculated using the following equation:

$$E(u,v) = \sum_i \sum_j e^{-\frac{|d((u,v),(i,j))|^2}{\sigma^2}}$$

$$|d((u,v),(i,j))| = \sqrt{\frac{(u-i)^2 + (v-j)^2}{A_R^2 \cos^2\theta + \sin^2\theta}}$$

wherein $\theta$ is the angle in the Cartesian plane, $A_R$ is the aspect ratio when printing between the image dot pitch in a predetermined direction and the direction perpendicular thereto and $\sigma$ is a parameter which may be chosen dependent on how many neighbouring elements are to be taken into account when calculating the energy value of a matrix element. The value 17 is now assigned to the remaining element in sub-matrix 1 having the lowest energy value $E(u,v)$. In this example this is the lower right element as can be seen in fig.5.

Subsequently, a second element in sub-matrix 2 is assigned a value equal to the number of sub-matrices + 2. This is the element in sub-matrix 2 having the lowest energy value of the elements within sub-matrix 2 having value zero. This procedure is continued till the initialisation value of each of the remaining elements is replaced by an integer value ranging from the number of sub-matrices + 1, being 17, to the number of elements in the master matrix, being 64.

The master matrix is converted to a dither matrix or dither mask by replacing the element values by threshold values. According to this example, a linear conversion approach is applied such that each grey scale level corresponds to a corresponding threshold value. The assignment of the threshold values is such that the lowest threshold value, corresponding to grey scale level 1 of the separation image, is assigned to the matrix elements having with integer values 1 to 16. By consequence the dot profile having the same size as the size of the master matrix corresponding to the lowest grey scale level generated when using this dither mask has sixteen pixels rendered. The second lowest threshold value is assigned to the matrix elements with integer values 17 to 32. By consequence the dot profile corresponding to grey scale level 2 generated when using this dither mask has 32 pixels rendered, being the pixels corresponding to grey scale level 1 and sixteen additional ones. By producing the dot profiles corresponding to grey scale levels three and four, the dither mask is completed.

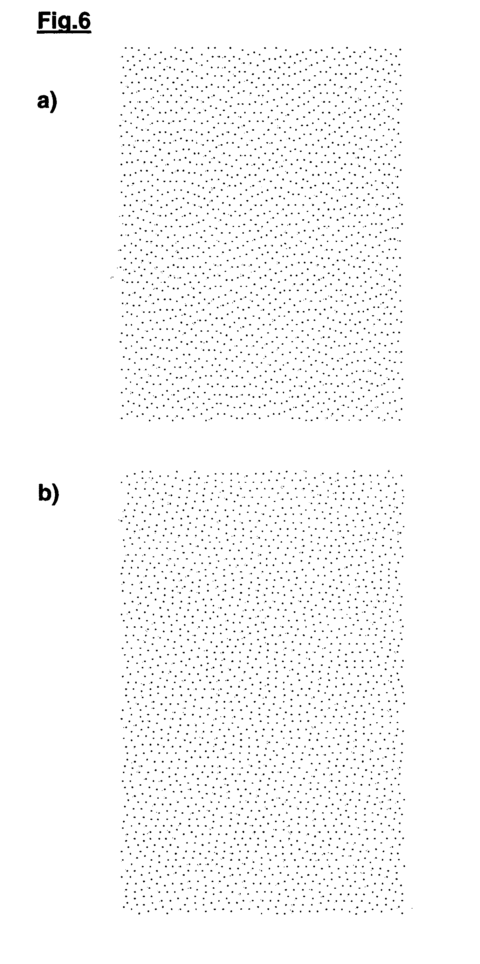

When generating dot profiles according to the present invention with an inkjet printer in a monochrome black mode, the influence of varied control of the aspect ratio when applying a local stochastic procedure is demonstrated. Suppose the printer prints in a printing mode having a print resolution of 300 dpi in the medium propagation direction, or in other words a dot pitch of about 84 $\mu$m, and a print resolution of 600 dpi in the scanning direction, or in other words a dot pitch of about 42 $\mu$m a the dot profile corresponding to a predetermined grey scale level. First the dot profile produced without taking the difference in dot pitch into account when generating the dither mask, or in other words $A_R$ is set equal to 1, is printed in this printing mode. As can be seen in Fig.6a) the dot profile produced using a dither mask generated with an isotropic local stochastic procedure contains snake-like artefacts in the scanning direction, i.e. the direction with the highest print resolution. Subsequently, the dot profile produced taking the difference in dot pitch into account when generating the dither mask, or in other words $A_R$ is set equal to 2, is printed in this printing mode. As can be seen in Fig.6b) the dot profile produced using a dither mask generated taking account of the differences in print resolution no longer contains visually disturbing artefacts.

Although, when desiring to print with a different resolution in the medium propagation direction and a direction perpendicular thereto, such as e.g. sub-scanning and scanning direction in case of a scanning ink-jet printer, best results are obtained using a local stochastic technique taking account of the aspect ratio between the dot pitch in these directions by introducing this aspect ratio when determining the interaction between matrix elements, it is clear that the aspect ratio can equally be taken into account when employing a general stochastic technique. In case of a "blue noise mask" by shaping the filter taking the aspect ratio into account.

## Claims

1.    A method for generating a dither mask using a local stochastic technique for use for the halftoning of grey scale images by a pixel by pixel comparison of the images against the dither mask, the method comprising the step of generating the dither mask by producing a sequence of dot profiles, each dot profile of the sequence corresponds to a grey scale level, using a stacking constraint with incremental grey scale level such that for each dot profile of the sequence the same pixels are selected compared to the preceding dot profile and the increment in the or each dot profile is realised by selecting at least one additional pixel, the position of each additional pixel being determined dependent on the positions of the previously selected pixels using the local stochastic technique,
**characterised in that**
for determining the position of each additional pixel use is made of local minimisation of a frequency or spatial energy function having the aspect ratio as a parameter, the aspect ratio being defined as the ratio between the dot pitch in a predetermined direction and a direction perpendicular thereto when rendering images.

2. The method as recited in claim 1, wherein the dither mask is built-up from a number of equally sized sub-matrices, each sub-matrix having a predetermined ranking order within the dither mask, such that the selection of each additional pixel is effected by selecting one of the available positions within a selected sub-matrix.

3. The method as recited in claim 2, wherein selecting one of the available positions within a selected sub-matrix is performed by determining for each available position within a selected sub-matrix an energy value using a spatial energy function and selecting the available position having the lowest energy value.

4. The method as recited in claim 3, wherein the aspect ratio between the dot pitch in a predetermined direction and a direction perpendicular thereto when rendering images is one of the parameters of spatial energy function.

5. The method as recited in claim 3 and 4, wherein when calculating an energy value using the spatial energy function the interaction of previously selected pixels of the selected sub-matrix as well as of the sub-matrices adjacent to the selected sub-matrix is taken into account.

**Patentansprüche**

1. Verfahren zum Erzeugen einer Dithermaske unter Verwendung einer lokalen stochastischen Technik zur Verwendung zur Rasterung von Graustufenbildern durch einen Pixel-für-Pixel-Vergleich der Bilder mit der Dithermaske, welches Verfahren den Schritt des Erzeugens der Dithermaske durch Produzieren einer Folge von Punktprofilen aufweist, wobei jedes Punktprofil der Folge einem Graustufenlevel entspricht, unter Verwendung einer Stapelrandbedingung mit ansteigendem Graustufenlevel, so daß für jedes Punktprofil der Folge verglichen mit dem vorhergehenden Punktprofil dieselben Pixel ausgewählt werden und das Ansteigen in dem oder jedem Punktprofil realisiert wird durch Auswählen wenigstens eines zusätzlichen Pixels, wobei die Position jedes zusätzlichen Pixels in Abhängigkeit von den Positionen der zuvor ausgewählten Pixel unter Verwendung der lokalen stochastischen Technik bestimmt wird,
**dadurch gekennzeichnet, daß**
zum Bestimmen der Position jedes zusätzlichen Pixels eine lokale Minimierung einer Frequenz- oder räumlichen Energiefunktion verwendet wird, die das Seitenverhältnis als einen Parameter hat, wobei das Seitenverhältnis definiert ist als das Verhältnis zwischen dem Punktabstand in einer vorbestimmten Richtung und einer dazu senkrechten Richtung beim Wiedergeben von Bildern.

2. Verfahren nach Anspruch 1, bei dem die Dithermaske aus einer Anzahl gleich großer Untermatrizen aufgebaut ist, wobei jede Untermatrix eine vorbestimmte Rangordnung innerhalb der Dithermaske hat, so daß die Auswahl jedes zusätzlichen Pixels durch Auswählen einer der verfügbaren Positionen innerhalb einer ausgewählten Untermatrix bewirkt wird.

3. Verfahren nach Anspruch 2, bei dem das Auswählen einer der verfügbaren Positionen innerhalb einer ausgewählten Untermatrix durchgeführt wird durch Bestimmen, für jede verfügbare Position innerhalb einer ausgewählten Untermatrix, eines Energiewertes unter Verwendung einer räumlichen Energiefunktion und Auswählen der verfügbaren Position mit dem niedrigsten Energiewert.

4. Verfahren nach Anspruch 3, bei dem das Seitenverhältnis zwischen dem Punktabstand in einer vorbestimmten Richtung und einer dazu senkrechten Richtung beim Wiedergeben von Bildern einer der Parameter der räumlichen Energiefunktion ist.

5. Verfahren nach den Ansprüchen 3 und 4, bei dem beim Berechnen eines Energiewertes unter Verwendung der räumlichen Energiefunktion die Wechselwirkung zuvor ausgewählter Pixel der ausgewählten Untermatrix sowie der der ausgewählten Untermatrix benachbarten Untermatrizen berücksichtigt wird.

**Revendications**

1. Procédé de génération d'un masque de juxtaposition utilisant une technique stochastique locale pour le tramage d'images d'échelle de gris par comparaison des images, pixel par pixel, en fonction d'un masque de juxtaposition,

**EP 1 608 146 B1**

le procédé comprenant l'étape consistant à générer le masque de juxtaposition en produisant une séquence de profils de points, chaque profil de point de la séquence correspondant à un niveau de gris, en utilisant une contrainte d'empilement au fur et à mesure que le niveau de gris augmente, de sorte que pour chaque profil de points de la séquence, on sélectionne les mêmes pixels que pour le profil de points précédent et on incrémente dans le ou dans chaque profil de points en sélectionnant au moins un autre pixel, la position de chaque pixel supplémentaire étant déterminée en fonction des positions des pixels précédemment sélectionnés en utilisant la technique stochastique locale,

**caractérisé en ce que**

pour déterminer la position de chaque pixel supplémentaire, on utilise la minimisation locale d'une fonction d'énergie spatiale ou de fréquence ayant le rapport de forme comme paramètre, le rapport de forme étant défini comme étant le rapport du pas dans une direction prédéterminée et dans une direction perpendiculaire à celle-ci, lorsque l'on restitue les images.

2. Procédé selon la revendication 1, dans lequel le masque de juxtaposition est constitué d'un certain nombre de sous-matrices de taille égale, chaque sous-matrice ayant un ordre de classement prédéterminé à l'intérieur du masque de juxtaposition, de telle sorte que la sélection de chaque pixel supplémentaire soit mise en oeuvre en sélectionnant l'une des positions disponibles à l'intérieur d'une sous-matrice sélectionnée.

3. Procédé selon la revendication 2, dans lequel la sélection d'une des positions disponibles à l'intérieur d'une sous-matrice sélectionnée est effectuée en déterminant, pour chaque position disponible à l'intérieur d'une sous-matrice sélectionnée, une valeur énergétique utilisant une fonction d'énergie spatiale et en sélectionnant la position disponible ayant la valeur énergétique la plus basse.

4. Procédé selon la revendication 3, dans lequel le rapport de forme entre le pas dans une direction prédéterminée et dans une direction perpendiculaire à celle-ci, lorsque l'on restitue les images, est l'un des paramètres de la fonction d'énergie spatiale.

5. Procédé selon les revendications 3 et 4, dans lequel, lorsque l'on calcule une valeur énergétique en utilisant la fonction d'énergie spatiale, on tient compte de l'interaction des pixels précédemment sélectionnés de la sous-matrice sélectionnée ainsi que des sous-matrices adjacentes à la sous-matrice sélectionnée.

**Fig.1**

| | | | | | | | |
|---|---|---|---|---|---|---|---|
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

**Fig.2**

| | | | |
|---|---|---|---|
| 1 | 9 | 3 | 11 |
| 15 | 5 | 13 | 7 |
| 4 | 12 | 2 | 10 |
| 14 | 8 | 16 | 6 |

**Fig.3**

| 1 | 0 | 0 | 0 | 0 | 0 | 0 | 0 |
|---|---|---|---|---|---|---|---|
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 2 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

**Fig.4**

| 1 | 0 | 0 | 9 | 3 | 0 | 0 | 11 |
|---|---|---|---|---|---|---|----|
| 0 | 0 | 0 | 0 | 0 | 0 | 0 | 0 |
| 0 | 0 | 0 | 0 | 0 | 0 | 0 | 0 |
| 15 | 0 | 0 | 5 | 13 | 0 | 0 | 7 |
| 4 | 0 | 0 | 12 | 2 | 0 | 0 | 10 |
| 0 | 0 | 0 | 0 | 0 | 0 | 0 | 0 |
| 0 | 0 | 0 | 0 | 0 | 0 | 0 | 0 |
| 14 | 0 | 0 | 8 | 16 | 0 | 0 | 6 |

## Fig.5

| 0 | 0 | 0 | 0 | 0 | 0 | | | |
|---|---|---|---|---|---|---|---|---|
| 6 | 0 | 14 | 0 | 0 | 6 | | | |
| 0 | 11 | 1 | 0 | 0 | 9 | 3 | 0 | 0 | 11 |
| 0 | 0 | 0 | _17_ | 0 | 0 | 0 | 0 | 0 | 0 |
| 0 | 0 | 0 | 0 | 0 | 0 | 0 | 0 | 0 | 0 |
| 0 | 7 | 15 | 0 | 0 | 5 | 13 | 0 | 0 | 7 |
| | | 4 | 0 | 0 | 12 | 2 | 0 | 0 | 10 |
| | | 0 | 0 | 0 | 0 | 0 | 0 | 0 | 0 |
| | | 0 | 0 | 0 | 0 | 0 | 0 | 0 | 0 |
| | | 14 | 0 | 0 | 8 | 16 | 0 | 0 | 6 |

## Fig.6

a)

b)

## Fig. 7

Initialisation step ⌐70

```
define master matrix ⌐71
        ↓
assign initialisation value to each matrix element ⌐72
        ↓
divide  master matrix in equally sized sub-
matrices ⌐73
        ↓
assign ranking order to each sub-matrix ⌐74
```

Element assignment step ⌐75

```
define a seed element in each sub-matrix taking
account of the sub-matrix ranking order ⌐76
        ↓
Assign ranking value to each non-seed element
taking account of the sub-matrix ranking order
using a local stochastic technique ⌐77
```

Threshold assignment step ⌐78

```
define a seed element in each sub-matrix taking
account of the sub-matrix ranking order
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5111310 A, Parker

- US 5535020 A, Ulichney

**Non-patent literature cited in the description**

- **P. LERMANT.** Efficient design of large threshold arrays for accurate tone reproduction. *IS&T's 48th Annual Conference Proceedings,* 530-535

- **H. R. KANG.** *IEEE Press,* 279-284